# EUROPEAN PATENT APPLICATION

(11) **EP 2 245 932 A1**
(43) Date of publication of application: **03.11.2010**
(21) Application number: 09710789.0
(22) Date of filing: 12.02.2009
(51) Int. Cl.: A01N 25/08, A01N 57/00

(54) **ENVIRONMENTALLY FRIENDLY SLOW-RELEASE PESTICIDE FORMULATIONS**

(30) Priority: 13.02.2008 ES 200800380
(71) Applicant: Consejo Superior De Investigaciones Científicas, 28006 Madrid (ES)
(72) Inventor: UNDABEYTIA LOPEZ, Tomas, E-41080 Estafeta-Puerto (Sevilla) (ES); MAQUEDA PORRAS, Celia, E-41080 Estafeta-Puerto (Sevilla) (ES); MORILLO GONZALEZ, Esmeralda, E-41080 Estafeta-Puerto (Sevilla) (ES); SANCHEZ VERDEJO, Maria Trinidad, E-41080 Estafeta-Puerto (Sevilla) (ES); SHLOMO, Nir, E-41080 Estafeta-Puerto (Sevilla) (ES)
(74) Representative: Pons Ariño, Angel
(86) International application number: PCT/ES2009/070022
(87) International publication number: WO 2009/101232

(57) **Abstract**

The present invention relates to a slow-release pesticide system in agragrian applications that includes but is not limited solely to insecticide, fungicide and herbicide formulations. The system includes a pesticide incorporated into vesicles that is formed by neutral lipids (thereby enhancing the water solubility of the pesticide). The vesicles that incorporate the pesticide are, in turn, adsorbed, on a clay mineral. The formulations are appropriate for pesticide molecules of any type (hydrophobic, acid and basic). Said pesticide formulation allows slow release of the active ingredient, thereby reducing the risk of pollution of groundwater and surface water.

## Description

### Field of the invention

This invention relates to pesticide formulations. In particular, it relates to slow release formulations designed to reduce losses of active ingredient thereby avoiding repetitive applications or higher doses, and consequently reducing the risk of surface and groundwater contamination while maintaining the desired effect of the pesticide on the target or objective.

### State of the technique

The use of pesticides is essential for worldwide food production. Upon reaching the soil, they may undergo processes of dissipation, such as microbial or chemical degradation, photodecomposition, volatilisation, sorption to soil colloids, etc. Additionally, losses through surface torrents and lixiviation across the soil profile may occur. This involves the reduced efficiency of conventional formulations, which require use at higher doses in order to minimise these losses, with the ensuing financial as well as environmental costs (Geisler et al., 2004; Yao et al., 2006).

The purpose of designing controlled-release pesticide formulations is to maintain the concentration threshold of the active ingredient which controls the pest in the soil or plant for longer by releasing it at an appropriate speed, thereby reducing its level in the environment because lower amounts or fewer applications are required in order to achieve the pursued biological effect. If only a very limited degree of control is required, the use of suspended or dissolved surfactants or polymers, or polymer-pesticide compositions, can reduce the volatilisation, lixiviation and wind removal thereof (Moore et al., 2002; Green and Beestman, 2007).

Numerous controlled-release methods have been developed by means of coating and micro-encapsulating pesticides such as atomisation, encapsulation in annular reactors, complex coacervation, organic coacervation, interfacial polymerisation, fluid bed coating, solvent evaporation, spinning disk coating, etc. (Hirech et al., 2003; Piccolo et al., 2006; Bahri and Taverdet, 2007).

An important aspect for the development of controlled release systems is the biodegradability of the products used for encapsulation. According to Wilkins (1990) these may be classified into: (i) starch and amylase-based systems; (ii) other polysaccharides (cellulose and derivatives, chitin, chitosan, alginic acid, dextran, etc); (iii) proteins (casein, albumin, gelatine, etc.); (iv) lignins and lignocellulose humic acids; (v) lipophilic acids (waxes, gums); (vi) synthetic polymers (polyvinyl alcohol, poly-lactate, poly-glycolate, other polyesters, polyamines, polyamidic acids, polyacrylamide); (vii) miscellaneous (tannins, polyhydroxybutyrate, polyhydroxyvalerate).

Examples include the slow release of ethylcellulose-based formulations of the herbicides Norflurazon and alachlor through solvent evaporation techniques (Fernandez-Urrusono et al., 2000; Sopeña et al., 2007). Cellulose can be derived to other polymers due to the abundance of hydroxylic groups. These new biodegradable polymers are used in its place due to the improvement of physical and/or chemical properties. Kök et al. (1999) designed formulations of the insecticide aldicarb using carboxymethylcellulose, which has the capacity to form a hydrogel in the presence of polyvalent cations. Unmodified starch is also an effective matrix for the encapsulation of solid and/or liquid active agents. Wing et al. (1993) described how the gelatinisation of starch in the presence of water and herbicide, by means of an extrusion process followed by particularisation to the required size, provided slow release herbicide products. The lixiviation of the herbicides norflurazon, atrazine and simazin was delayed by using controlled release starch granules (Boydston, 1992; Gish et al., 1992). Starch can also be derived due to the inherent advantages of the new matrix. Cationic starches will trap negatively-charged ions. Based on this principle, Zhu and Zhuo (2000) designed slow release formulations of the pesticide 2,4,5-T. Kraft lignin has also been evaluated as a controlled release agent for a broad number of pesticides: herbicides belonging to the family of phenylureas, metribuzin, alachlor, carbofuran, chloramben, etc. (Wilkins, 1990; Cotterill and Wilkins, 1996; Zhao and Wilkins, 2003). Formulations based on alginate have been described for pesticides such as dichlobenil, imidacloprid, fenamiphos, metribuzin, atrazine, trifluralin, thiobencarb, 2,4-D, isoproturon, cyromazine (Gan et al., 1994; Davis et al., 1996; Garrido-Herrera et al., 2006). Synthetic polymers such as polyureas, polyurethanes and polyamides, are used in most current commercial pesticide formulations. The microcapsules are generally obtained through a reaction of interfacial polymerisation between two reactant monomers in an oily external phase emulsion.

Clay minerals have also been used in controlled release formulations in order to improve the resolution of the base formulation. The release of alginate granule pesticides depends on the solubility of the trapped pesticide, but the release profile can be modified by adding clay mineral during the gelling process. Montmorillonite delayed the release of alachlor in alginate-based controlled release formulations, due to the adsorption of the herbicide on the clay mineral's surface, while the presence of other minerals such as kaolinite and attapulgite, produced a barrier effect on the herbicide's release (Gerstl et al., 1998). Clay mineral based formulations have been designed for the photostabilisation of pesticides. Margulies et al. (1992) observed that following 96 h or irradiation, a montmorillonite-trifluralin formulation retained 75% of its activity as opposed to 30% free trifluralin. Clay minerals are also used as supports in pesticide organoclays formulations with a view to reducing their percolation, photodegradation and volatilisation (Margulies et al., 1994; EI-Nahhal et al., 2001).

It is desirable to have a universal method for obtaining controlled release formulations for any pesticide irrespective of the molecule's acid/basic nature. Most prior formulations have been designed for hydrophobic molecules. However, their use is of limited validity for acid molecules, which is of fundamental interest in certain applications, such as the use of anionic herbicides in calcareous soils. These herbicides are negatively charged and are poorly retained in soil colloids, migrating to deeper soil levels and reducing their efficiency, in such a way that higher doses are required (Black et al., 1999; Sarmah et al., 2000). Patent US7030062 (Nir at al., 2006) designed formulations for anionic herbicides only by encapsulation in cationic micelles or vesicles formed by long alkyl chain alkylammonium cations, adsorbed by electrostatic interactions in montmorillonite. However, cations and the latest clay-organic compounds used are not considered to be of minimum toxicological risk according to the List of Minimal Risk Inert Ingredients of the US Environmental Protection Agency (USEPA). Consequently, there is a need to develop effective and environmentally-friendly pesticide formulations, irrespective of the nature of the molecule.

### Bibliography

- Black, I.D.; Pederson, R.N.; Flynn, A.; Moerkek, M.; Dyson, C.B.; Kookana, R.; Wilhelm, N. Mobility and persistence of three sulfonylurea herbicides in alkaline cropping soils of southeastern Australia. Aust. J. Exp. Agr. 1999, 39, 465-472.
- Boydston, R.A. Controlled release starch granule formulations reduce herbicide leaching in soil columns. Weed Technol. 1992, 6, 317-321.
- Clarke, R.J.; Lüpfert, C. Influence of anions and cations on the dipole potential of phosphatidylcholine vesicles: A basis for the Hofmeister effect. Biophys. J. 1999, 76, 2614-2624.
- Cotterill, J.V.; Wilkins, R.M. Controlled release of phenylurea herbicides from a lignin matrix: Release kinetics and modification with urea. J. Agric. Food Chem. 1996, 44, 2908-2912.
- Davis, R.F.; Wauchope, R.D.; Johnson, A.W.; Burgoa, B.; Pepperman, A.B. Release of fenamiphos, atrazine, and alachlor into flowing water from granules and spray deposits of conventional and controlled-release formulations. J. Agric. Food Chem. 1996, 44, 2900-2907.
- El-Bahri, Z.; Taverdet, J.L. Elaboration and characterisation of microparticles loaded by pesticide model. Powder Technol. 2007, 172, 30-40.
- El-Nahhal, Y.; Undabeytia, T.; Polubesova, T.; Mishael, Y.; Nir, S.; Rubin, B. Organo-clay formulations of pesticides: reduced leaching and photodegradation. Appl. Clay Sci. 2001, 18, 309-326.
- Fernández-Urrusuno, R.; Ginés, J.M.; Morillo, E. Development of controlled release formulations of alachlor in ethylcellulose. J. Microencapsulation 2000, 17, 331-342.
- Gan, Y.; Hussain, M.; Rathor, N.M. Behaviour of an alginate-kaolin based controlled-release formulation of the herbicide thiobencarb in simulated ecosystems. Pestic. Sci. 1994, 42, 265-272.
- Garrido-Herrera, F.J.; González-Pradas, E.; Fernández-Pérez, M. Controlled release of isoproturon, imidacloprid, and cyromazine from alginate-bentonite-activated carbon formulations. J. Agric. Food Chem. 2006, 54, 10053-10060.
- Geisler, G.; Hellweg, S.; Liechti, S.; Hungerbühler, K. Variability assessment of groundwater exposure to pesticides and its consideration in life-cycle assessment. Environ. Sci. Technol. 2004, 38, 4457-4464.
- Gerstl, Z.; Nasser, A.; Mingelgrin, U. Controlled release of pesticides into water from polymer formulations. J. Agric. Food Chem. 1998, 46, 3803-3809.
- Gish, T.G.; Shirmohammadi, A.; Wienhold, B.J. Field-scale mobility and persistence of commercial and starch-encapsulated atrazine and alachlor. J. Environ. Qual. 1994, 23, 355-359.
- Green, J.M.; Beestman, G.B. Recently patented and commercialized formulation and adjuvant technology. Crop Prot. 2007, 26, 320-327.
- Grey, T.L.; Walker, R.H.; Wehtje, T.R.; Hancock, H.G. Sulfentrazone adsorption and mobility as affected by soil and pH. Weed Sci. 1997, 45, 733-738.
- Hirech, K.; Payan, S.; Carnelle, G.; Brujes, L.; Legrand, J. Microencapsulation of an insecticide by interfacial polymerization. Powder Technol. 2003, 130, 324-330.
- Jendrasiak, G.L.; Smith, R.; Ribeiro, A.A. Chaotropic anion-phosphatidylcholine membrane interactions: an ultra high field NMR study. Biochim. Biophys. Acta 1993, 1145, 25-32.
- Kök, F.; Arica, M.Y.; Gencer, O.; Abak, K.; Hasirci, V. Controlled release of aldicarb from carboxymethyl cellulose microspheres: in vitro and field applications. Pestic. Sci. 1999, 55, 1194-1202.
- Margulies, L.; Stern, T.; Rubin, B.; Ruzo, L. Photo-stabilization of trifluralin adsorbed on a clay matrix. J. Agric. Food Chem. 1992, 40, 152-155.
- Margulies, L.; Stern, T.; Rubin, B. Slow release of S-ethyldipropylcarbamothioate from clay surfaces. J. Agric. Food Chem. 1994, 42, 1223-1227.
- Moore, C.E.; Chow, V.S-C.; Hopkinson, M.J.; Shannon, T.T. 2002. Pesticide formulations containing alkoxylated tristyrylphenol hemi-sulfate ester neutralized alkoxylated amine surfactants. U.S. Patent Document 6,495,595 B2.
- Nir, S.; Undabeytia, T.; Yaron-Marcovich, D.; El-Nahhal, Y.; Polubesova, T.; Serban, C.; Rytwo, G.; Lagaly, G.; Rubin, B. Optimization of adsorption of hydrophobic herbicides on montmorillonite preadsorbed by monovalent organic cations: Interaction between phenyl rings. Environ. Sci. Technol. 2000, 34, 1269-1274.
- Nir, S.; Rubin, B.; Mishael, Y.; Undabeytia, T.; Rabinovitch, O.; Polubesova, T. 2006. Controlled release formulations of anionic herbicides. US Patent Document 7,030,062 B2.
- Piccolo, O.; Borzatta, V.; Delogu, G., Capparella, E.; De Candia, C.; Gobbi, C.; Di Blasi, G. 2006. Cyclodextrin complex of compositions comprising pesticide and synergist. WO Patent Document 2006111570.
- Postle, A. Method for the sensitive analysis of individual molecular species of phosphatidylcholine by high-performance liquid chromatography using post-column fluorescence detection. J. Chromatogr. 1987, 415, 241-251.
- Sarmah, A.K.; Kookana, R.S.; Alston, A.M. Leaching and degradation of triasulfuron, metsulfuron-methyl, and chlorsulfuron in alkaline soil profiles under field conditions. Aust. J. Soil Res. 2000, 38, 617-631.
- Sopeña, F.; Cabrera, A.; Maqueda, C.; Morillo, E. Ethylcellulose formulations for controlled release of the herbicide alachlor in a sandy soil. J. Agric. Food Chem. 2007 (DOI 10.1021 /jf071459g).
- Thomae, A.V.; Wunderli-Allenspach, H.; Krämer, S.D. Permeation of aromatic carboxylic acids across lipid bilayers: the pH-partition hypothesis revisited. Biophys. J. 2005, 89, 1802-1811.

- Wilkins, R.M. 1990. Controlled delivery of crop-protection agents. Taylor & Francis Ltd, London, UK.
- Wing, R.E.; Carr, M.E.; Doane, W.M.; Schreiber, M.M. Controlled release of herbicide from an unmodified starch matrix. ACS Symposium Series 1993, 520, 211-219.
- Xiang, T-X.; Anderson, B.D. Substituent contributions to the transport of substituted p-toluic acids across lipid bilayer membranes. J. Pharm. Sci. 1994, 83, 1511-1518.
- Yao, Y.; Tuduri, L.; Harner, T.; Blanchard, P.; Waite, D.; Poissant, L.; Murphy, C.; Belzer, W.; Aulagnier, F.; Li, Y-F.; Sverko, E. Spatial and temporal distribution of pesticide air concentrations in Canadian agricultural regions. Atmos. Environ. 2006, 40, 4339-4351.
- Zhao, J.; Wilkins, R.M. Controlled release of the herbicide, fluometuron, from matrix granules based on fractionated organosolv lignins. J. Agric. Food Chem. 2003, 51, 4023-4028.
- Zhu, Z.; Zhuo, R. Crosslinked quaternary ammonium cornstarch matrix for slow release of carboxylic groups-containing herbicides. Starch 2000, 52, 58-63.

### Brief description of the invention

The object of the present invention is a controlled release formulation wherein the pesticide is joined to vesicles formed by neutral lipids, these vesicles being in turn adsorbed on a clay mineral. The neutral lipids act as an agent which increases the solubility of hydrophobic pesticides by incorporating the pesticide molecules within the vesicles formed in solution. Vesicles formed by neutral lipids are also capable of encapsulating charged pesticide molecules.

The PC and the clay minerals are approved substances considered of minimal toxicological risk by the USEPA, meaning that these are environmentally-friendly slow release formulations.

Pesticides susceptible to incorporation in the vesicles of neutral lipids may be acid or basic in nature, or hydrophobic in nature.

The neutral lipid vesicles are adsorbed on clay minerals, providing a slow release of the previously encapsulated active ingredient. A typical clay mineral is montmorillonite, but there is no sole limitation to the group of smectites.

Another object of the present invention is a method for the controlled release of pesticides which minimises unwanted losses of the active ingredient in the environment and which improves the efficacy of the formulation, by means of using a formulation that includes the encapsulation of molecules in vesicles without any restriction on the nature of the molecule (acid, basic or hydrophobic) and subsequent adsorption of the vesicles on clay minerals. Alternatively, the pesticides may be incorporated in preformed vesicle-clay complexes.

The use of the slow release formulation, described in the present invention, provides a higher concentration of the active ingredient in the neighbourhood of the target pest than the commercial formulation, and additionally reduces losses of the active ingredient by mechanisms of lixiviation, dissipation and degradation, meaning that its use diminishes the risk of contaminating surface water and groundwater, and is environmentally-friendly.

### Brief description of the drawings

With a view to understanding the invention and seeing how it may be embodied, it is now described in an incorporated body of text, without sole limitation to the example, referring to the accompanying drawings, wherein:

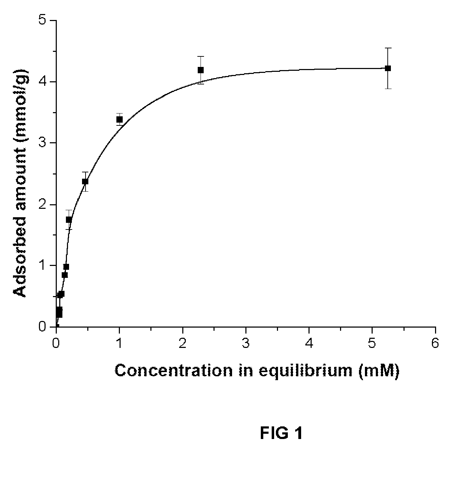

FIG. 1 shows the adsorption of the PC vesicles on montmorillonite at a clay concentration of 1.6 g/L.

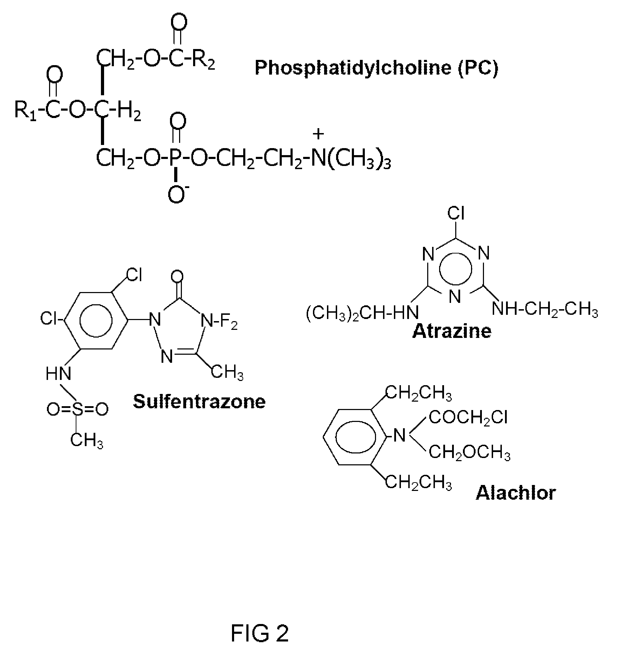

FIG. 2 shows the chemical formulae of the compounds used in the invention.

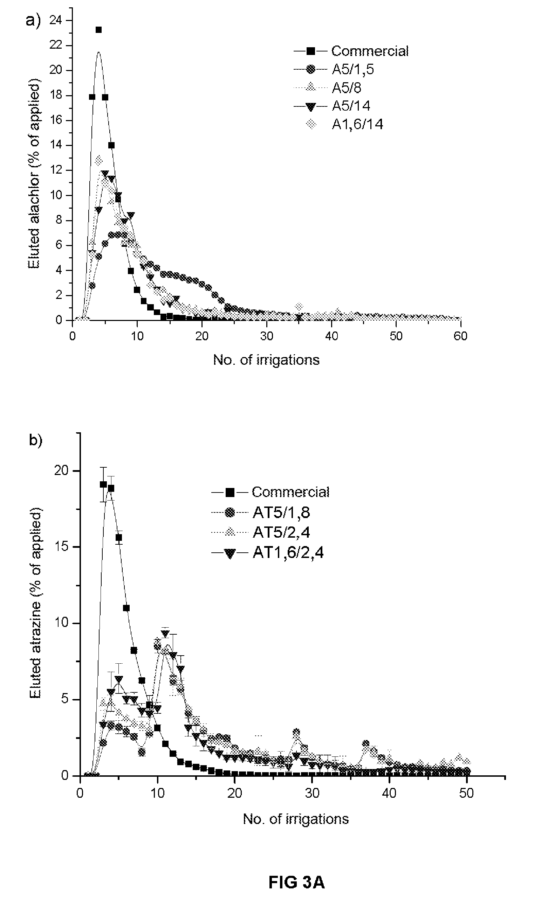

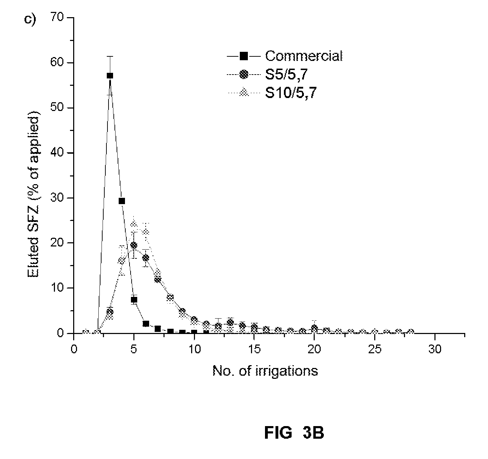

FIG. 3 shows the release of the herbicide of commercial formulations and of clay-PC in funnel experiments: (a) alachlor (A); (b) atrazine (AT) and (c) sulfentrazone (S). In clay-PC formulations, the first number indicates the clay concentration used in their preparation and the second, the concentration of herbicide employed.

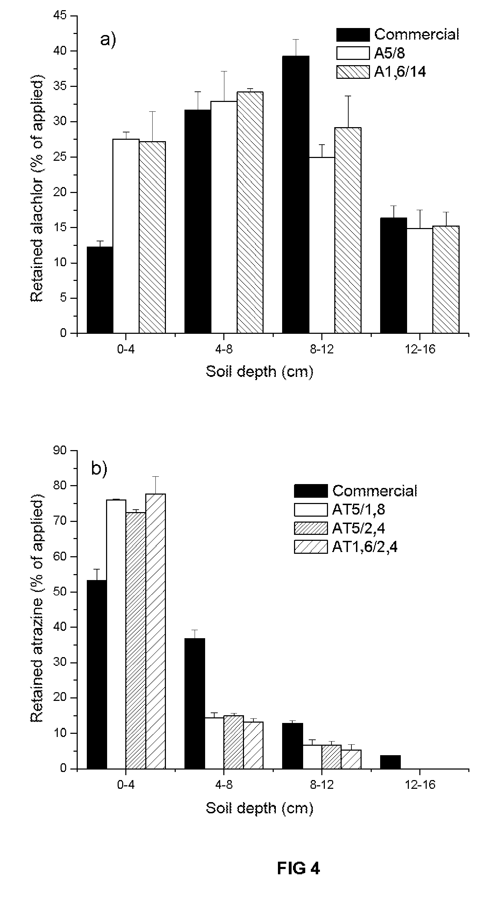

FIG. 4 shows the amount of (a) alachlor (A) and (b) atrazine (AT) retained n soil columns for the commercial and clay-PC formulations according to depth in lixiviation experiments. In the clay-PC formulations, the first number indicates the clay concentration used in their preparation, and the second, the concentration of herbicide employed.

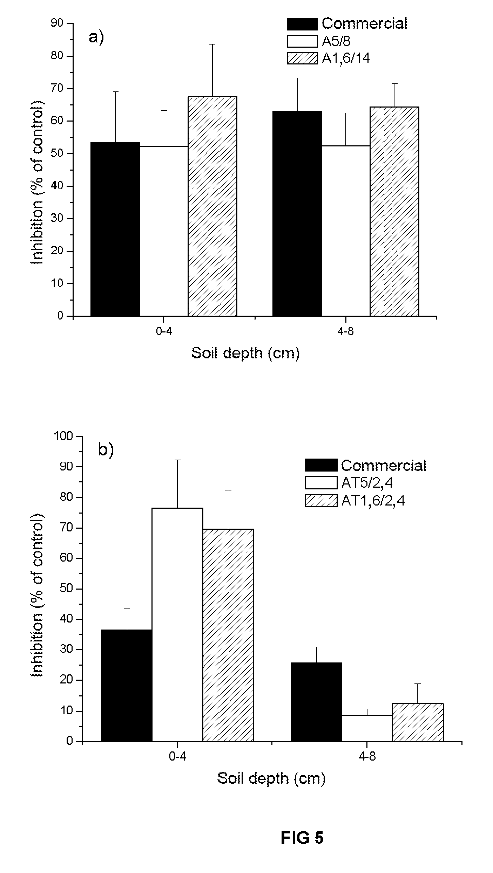

FIG. 5 shows the herbicide activity in the upper rings of the soil columns for the commercial and clay-PC formulations of (a) alachlor and (b) atrazine. In clay-PC formulations, the first number indicates the clay concentration used in their preparation, and the second, the concentration of herbicide employed.

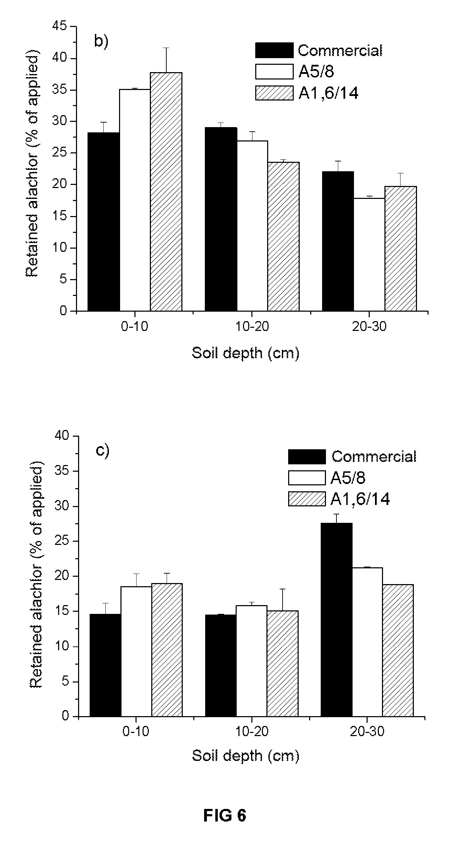

FIG. 6 shows the amount of alachlor retained in the soil according to depth in field experiments following 59 (a), 99 (b) and 168 (c) days after sowing. In clay-PC formulations, the first number indicates the clay concentration used in their preparation, and the second, the concentration of herbicide employed.

### Detailed description of the invention

The object of the present invention relates to controlled release formulations appropriate for pesticides irrespective of their acid/basic nature. The pesticide formulations are based on the union/incorporation of the pesticide molecules in vesicles and their subsequent adsorption on clay minerals. The vesicles are formed by neutral lipids. The clay mineral may be selected from the group of smectites (preferably montmorillonite), or from the groups of micas and fibrous silicates (such as sepiolite for example).

An optimal formulation for any pesticide must be designed in such a way that there is efficient adsorption of the pesticide on the vesicle-clay system providing a slow release system and preventing unwanted losses of the pesticide with the ensuing environmental risk as occurs with commercial formulations. When the vesicles incorporating the pesticide molecules are efficiently adsorbed on a clay mineral, they provide a high charge of the active ingredient (a.i.) in vesicle-clay formulations.

The adsorption of the liposomes formed by neutral lipids on the clay can be currently modelled by means of the Langmuir-Scatchard equation, which allows the value of the binding constant K to be calculated.

The model's calculations help to improve the design of a clay-based pesticide formulation, wherein on the one hand a high lipid concentration is selected, in order to achieve the best binding of the pesticide to the liposomes, and on the other hand an increase in clay concentration is sought in order to guarantee almost 100% adsorption of the liposomes. However, a lower concentration of clay will allow an increased percentage of the active ingredient in the formulation. This means that a compromise must be reached as to the content of these components in the formulation.

In a particular embodiment of the present invention, the neutral lipid of the vesicles is phosphatidylcholine (PC) which has a zwitterionic polar group and two long hydrocarbon chains which emerge from the fatty acid bond to the rest of the glycerol. The pesticide molecules are bound/incorporated inside the vesicles either by a mechanism of permeability/partition, or for charged molecules also by electrostatic interactions between parts of the pesticide molecule and the zwitterionic polar groups of the PC molecules. However, the pesticide molecules are most efficiently encapsulated when they are in neutral form.

The composition of the fatty acids of PC is not limited but preferably they are saturated as in the case of capric, lauric, myristic, palmitic, stearic, arachidic and behenic acids. The benefit of these formulations is that they are not aggressive with the environment due to the zero toxicity of the main auxiliary components, the PC molecules and the clay minerals.

In another particular embodiment of the present invention, the neutral lipid of the vesicles is a sphingolipid.

Pesticides susceptible to being bound/incorporated in the vesicle may be acidic, basic or hydrophobic in nature, and are selected from among those belonging to the families of triazines, acetanilides and aryltriazinones but are not limited to these and may be extended to other families such as sulfonylureas, imidazolinones, triazolopyrimidines, diphenylethers, dinitroanilines, uracyls, thiocarbamates, cyclohexanodiones, phenoxyacetic acids, phenylcarbamates, phenoxycarboxylic acids, phenylureas, benzonitriles, etc.

Pesticide molecules of an anionic nature are bound or incorporated into the neutral lipid of the vesicle mostly as neutral, which is in accordance with studies that assume that only the neutral form of an acid or base can permeabilise lipid bilayers (Xiang and Anderson, 1994). However, small anionic species can also permeabilise the bilayers of neutral lipids. Thomae et al. (2005) found that the permeability and partition coefficients of neutral species of small aromatic carboxylic acids were generally greater than or equal to those of ionised species from pH 2.0 up to a pH of almost 7.0, wherein the permeability was controlled by the anion.

It is believed that the interactions of anions with PC vesicles occurs by means of the screening of the positive potential of the intrinsic dipoles inside the membrane, which is consistent with anion bonding inside the membrane (Clarke and Lüpfert, 1999). However, mechanisms other than partition may be in operation such as the binding of the anion to the external surface of the PC by means of electrostatic interactions such as those described for CI- (Kotynska and Figaszewski, 2005), or some organic anions by means of a change in shape that allows the electrostatic interaction between the anion and the choline group while at the same time minimising the repulsion with the phosphate group (Jendrasiak et al., 1993).

An effective formulation is mainly determined by its biological effect on the target objective and its surrounding area; this means that in the particular case of herbicides, the pesticide must act principally on the root area and not at greater depths which do not require biological control. By reducing the lixiviation of the herbicide, the biological performance thereof could be increased, which would help to reduce the amounts applied, since weeds usually germinate in the upper layers of soil up to depths of 5 to 10 cm.

Slow release formulations must be designed in such a way that there is a compromise between the reduction in lixiviation and the maintenance of the herbicide's activity in the upper layer of the soil. The formulations of the present invention meet both requirements since the amount of herbicide that lixiviates is reduced several times (in comparison with commercial formulations) and the biological activity increases in the upper layer of the soil, which is of primordial interest for the control of weeds in the long term.

Using a formulation according to the present invention achieves a reduction in lixiviation of the active ingredient and a greater pesticide activity in the surface layers of the soil, in respect of commercial formulations.

Therefore, the formulations constituting the present invention provide controlled release mechanism which leads to the use of smaller quantities of active ingredient, since it is found in a higher concentration in the main place of action due to the reduction of losses due to mechanisms of dissipation and degradation.

### Examples and description

### Example 1. Preparation of the formulations

### a) Preparation of the phosphatidylcholine vesicles

The phosphatidylcholine (PC) employed was a mixture of 74% distearoyl-PC (DSPC) and 26% of 1-palmitoyl-2-stearoyl-PC (PSPC). The PC was dissolved in methanol. The solvent was eliminated by means of a gentle nitrogen current, and the lipid film was maintained first at high vacuum for 1 h and then hydrated for a further hour. The liposomes were reduced in size by making them pass 13 times through a sequential extrusion process which used polycarbonate filters of 0.1 µm pore size (Avanti Mini-extruder; Avanti Polar Lipids, Inc.). Hydration of the lipid and the procedures to adjust the size were carried out at 65 ºC, a temperature higher than that corresponding to the transition of the crystal gel-liquid (Tm) phases of the lipid with the highest Tm in the mixture (59.5 ºC).

### b) Optimisation of PC vesicle adsorption on clay

The adsorption of the liposomes obtained in point a) on the clay was carried out in duplicate in borosilicate tubes by mixing 10 ml of lipid solutions with concentrations of up to 12 mM, with 5 ml of a montmorillonite suspension under continuous agitation. The final clay concentration in the tubes was 1.6 g/L. Following agitation during 3 days at 20ºC, the tubes were centrifuged at 20000 g during 10 min, and the PC concentration in the supernatant was determined as in Postle (1987). The montmorillonite employed was a standard Wyoming montmorillonite (SWy-2).

The isotherm of the PC liposome adsorption (FIG. 1) on the clay is of type L, indicative of a relatively strong interaction of the lipid molecules with the surface of the clay mineral. A calculation of the packaging area of the PC molecules on the adsorption plateau is approximately 30 Å2, which is almost half the common area per monomer in PC monolayers in the air-water interphase. This indicates a bilayer deposit of the PC vesicles on the surface of the montmorillonite. When the PC liposomes are initially adsorbed, they interact with the clay through a relatively small contact area, but later structural changes occur which result in closer contacts between most of the molecules of the phospholipid and the clay sites.

The results of Table 1 demonstrate that the PC liposome adsorption on the clay can be suitably modelled following the Langmuir-Scatchard equation. The calculated constant value of the K bond (1000 M-1) is within the range of values previously described for the interaction between various molecules of herbicides and organoclays (Nir et al., 2000), but is much higher than those registered in the interaction between hydrophobic molecules and clay.

A combination of 6mM of PC and 5g/L of montmorillonite is considered optimal, since the calculations indicate 96.4% adsorption of the liposomes in this case, whereas with 1.6g/L of clay liposome adsorption reaches approximately 85%.

**Table 1. PC liposome adsorption on montmorillonite. Experimental and calculated values. a**

| Total lipid conc. (mmol/g clay). brackets (mM). | | Adsorbed exp. In (mmol/g clay) | Adsorbed calc. (mmol/g clay) | Final solution conc. (mM) |
|---|---|---|---|---|
| 0.233 | (0.373) | 0.202 | 0.210 | 0.050 |
| 0.320 | (0.510) | 0.284 | 0.290 | 0.055 |
| 0.558 | (0.893) | 0.520 | 0.510 | 0.061 |
| 0.598 | (0.957) | 0.546 | 0.550 | 0.084 |
| 0.933 | (1.493) | 0.847 | 0.849 | 0.138 |
| 1.110 | (1.783) | 0.984 | 1.000 | 0.208 |
| 1.875 | (3.0) | 1.618 | 1.680 | 0.415 |
| 3.750 | (6.0) | 3.110 | 3.210 | 1.020 |
| 5.625 | (9.0) | 4.200 | 4.450 | 2.290 |
| 11.25 | (18.0) | 6.280 | 5.960 | 7.940 |
| 0.1 b | (0.1) | 0.098 | 0.087 | 0.002 |
| 0.6 c | (3.0) | 0.582 | 0.581 | 0.090 |
| 1.2 c | (6.0) | 1.140 | 1.157 | 0.300 |

| | | | | |
|---|---|---|---|---|
| a. Wherever not specified the concentration of clay was 1.6 g/L. The calculations were carried out by means of the Langmuir-Scatchard equation using as total molar adsorption sites 3.6 mM per gram of clay; K=1000 M-1. The value of R2 was 0.995 and the square root of the mean quadratic error was 0.14 mmol/g. b. In this case the clay concentration was 1 g/L. c. In this case the clay concentration was 5g/L. | | | | |

### c) Preparation of the clay-PC formulations

The formulations of PC with different herbicides were prepared by dissolving various quantities of the herbicide in question in a solution of 6 mM PC through sonication, and subsequent adding of montmorillonite. The herbicides employed were alachlor (hydrophobic in nature), atrazine (of basic nature) and sulfentrazone (of acid nature). FIG. 2 shows the chemical formulae of said compounds. The added amounts of the herbicides were 1.5-14 mM for alachlor, 1.8-2.4 mM for atrazine and 1.3-5.7 mM for sulfentrazone. The clay concentration was 1.6, 5 or 10 g/L. Following agitation during 24 h the suspensions were centrifuged at 20000 g during 10 min, the remaining herbicide in the supernatants was analysed, and the precipitates were lyophilised giving rise to the formulations. The herbicides were analysed by HPLC (Shimadzu Model 10A) fitted with a PDA detector. The reverse phase column was a Kromasil 100 C18 of 15 cm. The flow speed was 1.0 mL min-1. The mobile phases were: for sulfentrazone 45% acetonitrile and 55% water with 0.65 mM of trifluoroacetic acid; for alachlor 60% acetonitrile and 40% water, and for atrazine 50% methanol and 50% water. The wavelengths were adjusted to 220 nm for alachlor, 230 nm for atrazine and 242 nm for sulfentrazone. The retention times were 6.26, 5.13 and 4.06 min for alachlor, atrazine and sulfentrazone, respectively.

The final concentrations of the formulations and the percentage in weight of the herbicides in the formulation are shown in Table 2. In the preparation of sulfentrazone formulations (anionic pesticide), the lipid film after vacuum was hydrated using buffer with pH 5.0 (0.096 M citric acid/0.2 M NaOH) instead of just water as indicated in the preparation of PC vesicles of point a). The active ingredient content was determined by means of sonication of 5 mg of each formulation in 20 ml of methanol. The suspensions were centrifuged and the herbicide in the supernatants was analysed.

**Table 2. Herbicide-vesicle-clay formulations. a**

| Added clay (g/L) | Added herbicide (mM) | Notation of the formulation | Active ingredient (w/w %) |
|---|---|---|---|
| Alachlor | | | |
| 5 | 1.5 | A5/1.5 | 2.0 |
| 5 | 8 | A5/8 | 15.0 |
| 5 | 14 | A5/14 | 24.0 |
| 1.6 | 14 | A1.6/14 | 39.5 |

| Atrazine | | | |
|---|---|---|---|
| 5 | 1.8 | AT5/1.8 | 3.0 |
| 5 | 2.4 | AT5/2.4 | 4.6 |
| 1.6 | 2.4 | AT1.6/2.4 | 9.5 |

| Sulfentrazone | | | |
|---|---|---|---|
| 5 | 2.6 | S5/2.6 | 7.4 |
| 5 | 5.7 | S5/5.7 | 19.0 |
| 10 | 5.7 | S10/5.7 | 13.0 |

| | | | |
|---|---|---|---|
| a. The initial concentration of PC was always 6 mM. | | | |

A primordial factor in the encapsulation of acidic molecules is the pH of the solution. Sulfentrazone (SFZ) adsorbed poorly in a suspension of 5 g/L montmorillonite in a solution of 6 mM of PC and 2.6 mM of SFZ prepared in a buffer of pH 7.0 Trizma-HCl 1 M. The adsorption increased from 11.8% to 69.5% when the solution was prepared in a buffer of pH 5.0. At pH 5.0, the speciation of SFZ in solution was 97.3% as neutral molecules and the remaining 2.7% as anions, whereas at pH 7.0 most molecules of SFZ remained as anionic species (73.4%) over neutrals (26.6%). This indicates that the sulfentrazone molecules were preferably incorporated as neutrals. However, small anionic species can also permeabilise the bilayers of PC. In fact, SFZ adsorption at pH 7.0 was 4 times higher than the amount of neutral species in solution.

These results indicate that in the design of acidic molecule formulations (SFZ for example), optimisation for the incorporation thereof involves choosing in the PC liposome preparation, a buffer medium in which most molecules remain as neutral species. The pH range for buffers to be employed is broad, from 4 to 10, since in this range the polar group of PC is zwitterionic without net charge.

### Example 2. Herbicide release in Büchner funnel systems

The release of herbicides was analysed from PC formulations (obtained in example 1, section c) as well as that of commercial products, in Büchner-type funnel experiments, simulating irrigation in the first 0.5 cm of the top layer of a sandy soil.

In this experiment, 98.9 g of sandy soil was added to a Büchner funnel (internal diameter 9.5 cm) containing a paper filter at the bottom. The layer of soil was homogenised at a height of 0.5 cm. This soil contained 8.6% of Ca(C03)2, 0.7% of organic matter and had a pH of 7.8. The surface of the soil was uniformly spread with the different herbicide formulations. The amount of active ingredient applied was 1 kg ha-1. The layer of soil in each funnel was irrigated 43 times at 20-minute intervals with 15 mL, each wash corresponding to 2.12 mm of rain, or to a total equivalent amount of 91 mm of rain. The eluted volume following each irrigation was gathered and the herbicide was analysed as described in Example 1. The commercial formulations employed were Herbimur Atrazine (475 g/L a.i.) for atrazine, Alanex (48% a.i.) for alachlor and Boral (75% a.i.) for sulfentrazone.

FIG. 3 shows the elution curves obtained for the commercial formulations of the herbicides as well as for those based on PC. The shape of the curves for the PC formulations of atrazine show two elution peaks, which is ideal for slow release formulations because it means that a sizeable fraction of molecules bound to the herbicide break out in the first stages when high bioefficiency is required, and the fraction that remains is more energetically bound and is released more gradually than in the case of the commercial formulation, as can be observed from a lower rising part and a longer extended tail. The PC-based formulations of alachlor and sulfentrazone provide curves with only one elution peak, but flatter and wider than those of the commercial formulations which are highly symmetrical indicating poor retention of the herbicide molecules.

In the case of alachlor formulations, the herbicide is completely eluted from the commercial formulations following 23 irrigations, and following 58 for those based on PC-clay. Total eluted percentages were 99.9 ± 2.3 for the commercial formulation, and 100.7 ± 1.8, 97.3 ± 3.2, 98.3 ± 2.5 and 97.0 ± 2.2 for the PC-clay based formulations A5/1.5, A5/8, A5/14 and A1.6/14, respectively. These results are interesting given that the entire herbicide is available for controlling weeds. The accumulated eluted amount of alachlor following 8 irrigations, which is equivalent to 18.8 mm of rain was 88.9 ± 2.0% for the commercial formulation, whereas recoveries of 34.5 ± 0.8, 53.8 ± 0.5, 55.6 ± 1.3 and 54.9 ± 0.6% were obtained respectively for the PC-clay formulations A5/1.5, A5/8, A5/14 and A1.6/14, equivalent to a significant reduction in lixiviation of 61, 39, 37 and 38%, respectively, compared to the commercial formulation.

Atrazine-PC formulations also showed a considerable reduction in lixiviation. Following 8 irrigations, the accumulated amount of lixiviated herbicide was 79.3±0.3% for the commercial formulation, whereas values of 15.7±0.1, 24.2±0.2 and 26.3±4.3% were obtained for AT5/1.8, AT5/2.4 and AT1.6/2.4, respectively, which is equivalent to a reduction in lixiviation of between 67 and 80%. Total eluted amounts were 101.8±1.8 for the commercial formulation, 95.7±5.5 for AT5/1.8, 103.4±3.4 for AT5/2.4 and 100.4±0.8 for AT1.6/2.4, once again indicating that an irreversible bond of the herbicide was not occurring in the PC-clay formulations.

The commercial formulation of SFZ eluted more rapidly than that of the other herbicides. The applied dose of SFZ was in the region of 11 times higher than maximum recommended dose (92 g ha-1). However, the purpose of these experiments of release over a fine layer of soil was to prove whether an effective reduction in lixiviation of the herbicide could be obtained using the PC-clay formulations. The mobility of this herbicide is enormously influenced by the pH of the soil since adsorption decreases with the increase in pH, the highest reduction being at a pH above the pKa of SFZ (Grey et al., 1997). Consequently, a minimum adsorption to the soil is occurring due to the high pH, and therefore the elution of SFZ-PC formulations can only be reflecting the release of the herbicide from the matrix itself. The total eluted amounts were 101.3±5.1% for the commercial formulation, 107.6±7.9% for S5/5.7 and 109.7±11.6% for S10/5.7. The reduction in lixiviation is equivalent to 57 and 53% compared to the accumulated eluted amounts of SFZ following 5 irrigations when compared to the commercial formulation, which had almost totally eluted (94%).

The doses applied in these experiments for atrazine and alachlor are within the range applied in field conditions.

These data demonstrate the slow release of formulations prepared with PC and acid, basic or hydrophobic herbicides.

### Example 3. Lixiviation and biological activity in soil columns

Methacrylate tubes of 3.0 cm in diameter were cut into sections of 4 and 8 cm, and three units of 4 cm were stuck to one end of a unit of 8 cm in order to build a column of 20 cm. The column was covered at the opposite end to the 8 cm unit with a 1 mm nylon mesh together with a fine layer of glass wool (0.5 g) so as to firmly fasten the soil in the column. Sandy soil was packaged (0.164 g) from the top part of the column (8 cm) creating a soil column of 16 cm which could rapidly be separated into 4 cm segments. The measured pore volume in the soil columns was 38 ml.

3 ml of suspensions of the commercial formulations and the PC-clay formulations of atrazine and alachlor (according to example 1, section c) were uniformly spread on the soil surface at a dose of 3 kg a.i. ha-1. The soil column experiments were carried out in triplicate. Distilled water was added equivalent to 70 mm of rain (50 ml) from the top part of the column in two portions, leaving the soil to balance during 24 h between each addition and following the final addition. The lixiviates were collected and the herbicide was analysed.

Each soil column was separated into 4 cm segments. In duplicate, 2 g of soil were dried at 100ºC during 24 h in order to determine the humidity in each soil segment. The amount of herbicide that remained in each segment was extracted in triplicate by means of agitation of 5 g of soil with 15 ml of methanol during 24 h. The suspensions were centrifuged and the herbicide was analysed by HPLC.

A bioassay was used to calculate the residual activity of the herbicides in the first two upper rings of the soil columns. Six cups containing 15 g of soil from each segment for each formulation were planted with 7 seeds of Sytaria Viridis, and irrigated daily during 2 weeks. The bioactivity of the formulations was determined by measuring the loss in fresh weight per shoot in respect of the control.

The amounts extracted from each segment of atrazine and alachlor of the commercial and PC-clay formulations (FIG. 4) show a considerable reduction in lixiviation in the upper rings of the PC-clay formulations, compared to the commercial formulations. The alachlor that remained in the first 0-4 cm was 12.3±0.9% of the total applied for the commercial formulation, while higher amounts in the region of 2.3 times were determined for PC-clay formulations. No clear difference was detected at the lower depth (12-16 cm) between the commercial and PC-clay formulations, but the latter accumulated at a depth of 4-8 cm as opposed to the commercial ones, which lixiviated at greater depths, its fraction being the highest between 8 and 12 cm.

The results of the bioassay for the alachlor herbicide did not show differences in herbicide activity in the upper layers of the soil between the different formulations duet to the high sensitivity to this herbicide of the tested plant (FIG. 5).

The PC-clay formulations of atrazine acted relatively better than those of alachlor when compared to the commercial formulation. The amount retained in the top layer (0-4 cm) was about 75% of that applied as opposed to a value of 53% for the commercial one, representing a reduction in lixiviation of 42%. In the following segment (4-8 cm) the amount of atrazine detected with the commercial formulation was 2.5 times higher than those with PC-clay. No lixiviated amount was detected at the greatest depth (12-16 cm) for the PC-clay formulations in contrast to the commercial formulations. This data was corroborated by measuring the herbicide activity in the upper rings (FIG. 5). A very high percentage of inhibition (∼72%) was obtained for the PC-clay formulations. This percentage of inhibition in the top layer is in the region of 2 times higher than that of the commercial formulation. The opposite trend was observed in the following segment, a bioactivity in the region of 2 times higher with the commercial formulation than with the PC-clay formulations, rightfully in accordance with the extracted amounts.

The combination of extracted amounts and percentages of inhibition indicate that a reduction of between 2 and 4 times the recommended dose of alachlor and atrazine, respectively, can be applied when using PC-clay formulations.

Slow release formulations must be designed in such a way that a compromise is reached between the reduction in lixiviation and the herbicide activity in the top layer of the soil. The PC-clay formulations meet both these requirements since the amount of lixiviated herbicide is reduced several times and the biological activity increases in the top layer of the soil, which is of primordial interest for controlling weeds in the long term.

### Example 4. Bioactivity of the SFZ formulations

Plant pots 10 cm wide were covered with filter paper and filled with 424 g of a sandy loam soil un giving rise to a height of 4 cm. The commercial and PC-clay formulations prepared in example 1 were uniformly spread in the plant pots at the maximum recommended dose of 90 g a.i. ha-1. The commercial formulation used was Boral (75% a.i.). Water was added equivalent to 250 and 500 m3 ha-1, eluted volumes were collected and the herbicide was analysed. The soil was meticulously stirred and transferred to cups each containing 15 g of treated soils. Seven seeds of Setaria Viridis were planted, and the herbicide activity was determined by measuring the reduction in fresh weight of the shoot in relation to a control.

The release of SFZ from PC-clay formulations was two times lower than that of the commercial formulation under medium irrigation (Table 3). Under high irrigation, the herbicide eluted completely from the commercial formulation, unlike from the PC-clay formulations, wherein approximately 10% of the amount applied remained in the soil.

**Table 3. Amounts of SFZ detected in plant pot lixiviates.**

| Formulation | Irrigation water | | | |
|---|---|---|---|---|
| | 250 m3 ha-1 | | 500 m3 ha-1 | |
| | % eluted | % retained | % eluted | % retained |
| Commercial | 82.1 | 17.9 | 100 | 0 |
| S5/5.7 | 57.8 | 42.2 | 89.4 | 10.6 |
| S10/5.7 | 63.4 | 36.6 | 91.9 | 8.1 |

Herbicide activity in the soil was checked (Table 4). No herbicide activity was observed for the commercial formulation under high irrigation in accordance with the amounts determined to have remained in the soil. The PC-clay formulations were highly bioactive despite their low amount, which could be due to the high dose-response of the test plant in respect of this herbicide. At low irrigation, the commercial formulation presented a fairly low activity, whereas that of the PC-clay formulations was approximately 3 times greater.

**Table 4. Herbicide activity in the top layer of a soil (4 cm) treated with SFZ formulations at a dose of 90 g a.i. ha-1 according to irrigated amounts. The percentages of inhibition are expressed as a reduction in fresh weight of the shoot per plant in respect of a control. a**

| Formulation | Inhibition (% of the control) | |
|---|---|---|
| | 250 m3 ha-1 | 500 m3 ha-1 |
| Commercial | 18.4bc | 0c |
| S5/5.7 | 48.7a | 47.3a |
| S10/5.7 | 41.3ab | 36.9ab |

| | | |
|---|---|---|
| a. Means with the same letter are not significantly different at the 5% level according to Student's multiple range test. | | |

These results clearly indicate the benefit of PC-clay formulations for reducing the lixiviation of anionic herbicides and improving the herbicide activity in the worst possible scenarios, such as in calcareous soils and under high irrigation.

### Example 5. Field experiments

A field experiment was conducted in order to compare and test the efficacy of various formulations of alachlor. Avena Sativa (30 g m-2) was planted in a sandy loam soil. This soil has a pH of 8.9, a Ca(C03)2 content of 4.9% and 1.36% of organic matter. The commercial formulations and two of PC-clay were applied (A5/8, A1.6/14) in a random block design with 3 replicates. The dose of alachlor was 3 kg ha-1.

The soil columns were sampled without altering each plot to a depth of 30 cm. A first sample was taken after 59 days, a second one after 99 days and a last one at the end of the experiment, after 168 days. It was not necessary to apply irrigation. The plots received 46, 158 and 256 L m-2 of rain before the first, second and third sample, respectively. The matrices extracted from the unaltered soil to a depth of 30 cm were divided into three segments of 0-10, 10-20 and 20-30 cm. The amount of alachlor was extracted from each segment in triplicate using 5 g of soil and 10 ml of methanol, and left to balance for 24 h under continuous agitation. The suspensions were centrifuged and the herbicide in the supernatants was analysed by using the same methodology as in the previous examples.

At the end of the experiment, the plant shoots were harvested measuring their fresh weight.

The reduction in fresh weight in respect of the control was of 48, 52 and 57% for the commercial formulation, A5/8 and A1.6/14, respectively. However, no statistical difference was observed in the performance of the harvest between the commercial and PC-clay formulations.

FIG. 6 shows the amounts of alachlor in the matrices of the soil columns after the first three samples. The total amount of alachlor that remained in the field was similar between the first and second sample. The alachlor retained in respect of the total applied for the commercial formulation was 76.8±6.4 and 79.2±4.2%, for A5/8 was 79.5±7.7 and 79.8±2.1% and for A1.6/14 was 82.9±4.6 and 87.9±7.5%. The recoveries were far less in the third sample. Again no difference was observed for the three applied formulations in the total extracted amounts. The amounts of alachlor retained were 56.6±3.0, 55.5±2.5 and 52.9±6.2% for the commercial formulation, A5/8 and A1.6/14, respectively. However, the distribution model changes between one sample and the next. In the first sample, a significantly higher amount was obtained in the top layer for PC-clay formulations than for the commercial one. The herbicide accumulated more at the depth of 10-20 cm for the commercial one than for the PC-clay formulations, while the amounts retained were similar at the greatest depth. In the second sample, a reduction in the amount of alachlor in the top layer was observed for all formulations. However, there was still a significant difference in the top layer of the soil between the commercial and PC-clay formulations, as previously observed. The most important difference between these samples is the higher accumulation of alachlor in the deeper segments, where increases of up to 52% and 25%, respectively, were observed for the commercial and PC-clay formulations. This distribution model was also observed in the third sample, in which alachlor recoveries were lower at the three depths.

The field experiment clearly demonstrates a reduction in lixiviation of the herbicide in PC-clay formulations when compared to the commercial formulation, while maintaining bioefficiency in the top layer of the soil. The dose applied is within the upper limits of the recommended dose in agricultural applications. A lower dose will show a more revealing difference in harvest performance, since a lower amount will remain in the top layer for the effective control of weeds, which is only a small fraction of the amount applied at the highest employed dose.

Although the invention has been described together with a specific body of text, it is obvious that many alternatives and variations will be apparent and specialised to that described previously in the art. Accordingly, the invention aims to encompass all alternatives and variations that fall within the spirit and objectives of the accompanying claims.

## Claims

1. Slow release pesticide formulation comprising a pesticide bound to vesicles formed by neutral lipids, said vesicles bound or incorporated into the pesticide being adsorbed on a clay mineral.

2. Pesticide formulation according to claim 1, wherein the neutral lipid that forms the vesicles is a phospholipid, preferably of natural origin.

3. Pesticide formulation according to claim 2, wherein the phospholipid is phosphatidylcholine, which is considered a substance of minimal toxicological risk.

4. Pesticide formulation according to claim 3, wherein the aforementioned phosphatidylcholine is preferably formed by saturated fatty acids but is not limited to these.

5. Pesticide formulation according to claim 1, wherein the neutral lipid that forms the vesicles is a sphingolipid.

6. Pesticide formulation according to claim 1, wherein the clay mineral is selected from among the groups of smectites, mica and fibrous silicates.

7. Pesticide formulation according to claim 1, wherein said pesticide is of acid or basic nature.

8. Pesticide formulation according to claim 1, wherein said pesticide is of hydrophobic nature.

9. Pesticide formulation according to claims 7 and 8, wherein the pesticides are selected from among the families of triazines, acetanilides and aryltriazinones but not limited to these and may be extended to other families such as sulfonylureas, imidazolinones, triazolopyrimidines, diphenylethers, dinitroanilines, uracyls, thiocarbamates, cyclohexanodiones, phenoxyacetic acids, phenylcarbamates, phenoxycarboxylic acids, phenylureas, benzonitriles, etc.

10. Pesticide formulation according to claim 1, wherein the lipid phosphatidylcholine and the clay mineral are of minimal toxicological risk.

11. Method for the preparation of slow release pesticide formulations in accordance with claims 1 to 10 comprising the following stages: a) formation of the neutral lipid vesicles; b) bonding or incorporation of the pesticide into the vesicles of the preceding point; c) adsorption of the vesicles incorporating the pesticide on a clay mineral.

12. Method for the preparation of slow release pesticide formulations in accordance with claim 11, **characterised in that** it allows the use of a lesser amount of active ingredient than the commercial formulation.

13. Method of pest control consisting of applying a suitable amount of the slow release formulation according to any of claims 1 to 10.

14. Method of pest control according to claim 13, **characterised in that** it achieves a higher concentration of the active ingredient in the neighbourhood of the target pest than the commercial formulation.

15. Method of pest control according to claim 13, **characterised in that** its use reduces losses of the active ingredient due to mechanisms of lixiviation, dissipation and degradation.

16. Method of pest control according to claim 13, **characterised in that** its use reduces the risk of contaminating surface and ground water.

17. Method of pest control according to claim 13, **characterised in that** its use is environmentally-friendly.
